# EUROPEAN PATENT APPLICATION

(11) **EP 3 034 648 A1**
(43) Date of publication of application: **22.06.2016**
(21) Application number: 15200578.1
(22) Date of filing: 16.12.2015
(51) Int. Cl.: C23C 4/02, F01D 5/28, C23C 4/11, C23C 4/134

(54) **METHODS FOR COATING GAS TURBINE ENGINE COMPONENTS**

(30) Priority: 16.12.2014 US 201462092520 P
(71) Applicant: United Technologies Corporation, Farmington, CT 06032 (US)
(72) Inventor: TU, John S., West Hartford, CT Connecticut 06107 (US); KIRSOPP, Philip J., Lebanon, CT Connecticut 06249 (US); LITTON, David A., West Hartford, CT Connecticut 06107 (US); ZELESKY, Mark F., Bolton, CT Connecticut 06043 (US); MOURA, Dennis M., South Windsor, CT Connecticut 06074 (US); BUTLER, Aaron S., Colchester, CT Connecticut 06415 (US)
(74) Representative: Hall, Matthew Benjamin

(57) **Abstract**

The present disclosure relates to methods (100; 300; 400; 500) for coating gas turbine engine components (200), such as combustor panels. In one embodiment, a method includes forming a first layer to a substrate to form a bond coat (210), and forming a second layer (215) over the first layer. The second layer may be formed by a material having a thermal conductivity within the range of 4.45 to 30 Kcal / (m h°C). According to one or more embodiments, the first layer may be formed by at least one of a high velocity oxy-fuel (HVOF) source, an electric-arc source and low pressure plasma spraying. According to one or more embodiments, the second layer, and as a result a thermal barrier coating, may be formed by at least one of air plasma spraying, suspension plasma spraying, and electronic beam physical vapor deposition.

## Description

### FIELD

The present disclosure relates to methods for applying coatings, and more particularly, to methods for application of thermal barrier coatings and the components coated by these methods.

### BACKGROUND

Sections of gas turbine engines experience thermally severe environments. These environments can expose parts of a gas turbine engine to high levels of stress that can result in component distress and wear. There is a need in the art, and a desire, to enhance engine component durability and coatings applied to engine components.

### BRIEF SUMMARY OF THE EMBODIMENTS

Disclosed and claimed herein are components of gas turbine engines and methods for coating gas turbine engine components, such as combustor panels. One embodiment is directed to a method for coating gas turbine engine components, the method including forming a first layer to a substrate, the first layer forming a bond coat for the substrate. The method also includes forming a second layer over the first layer by air plasma spraying, wherein the second layer is formed by depositing a powder material having a thermal conductivity within the range of 4.45 to 30 Kcal / (m h°C) into a plasma jet to melt and propel the powder material to the first layer.

In one embodiment, the bond coat is formed by a high velocity oxy-fuel (HVOF) source.

In one embodiment, the bond coat is formed by an electric-arc source.

In one embodiment, the bond coat is formed by low pressure plasma spraying.

In one embodiment, the powder material is at least one of yttria-stabilized zirconia and gadolinium-stabilized zirconia.

In one embodiment, the first layer and second layer are formed in ambient air to provide a thermal barrier layer for the substrate for operation in a gas turbine engine.

One embodiment is directed to a component of an engine including a substrate, and a first layer formed to the substrate, the first layer forming a bond coat for the substrate. The component also includes a second layer formed over the first layer by air plasma spraying, wherein the second layer is formed by depositing a powder material having a thermal conductivity within the range of 4.45 to 30 Kcal / (m h°C) into a plasma jet to melt and propel the powder material to the first layer.

One embodiment is directed to a method for coating gas turbine engine components. The method includes forming a first layer to a substrate, the first layer forming a bond coat for the substrate. The method also includes forming a second layer over the first layer by suspension plasma spraying, wherein the second layer is formed by depositing a material having a thermal conductivity within the range of 4.45 to 30 Kcal / (m h°C) and in the form of a suspension into a plasma jet to melt and propel the material to the first layer.

In one embodiment, the bond coat is formed by a high velocity oxy-fuel (HVOF) source.

In one embodiment, the bond coat is formed by an electric-arc source.

In one embodiment, the bond coat is formed by low pressure plasma spraying.

In one embodiment, the suspension material is at least one of yttria-stabilized zirconia and gadolinium-stabilized zirconia.

In one embodiment, the first layer and second layer are formed in ambient air to provide a thermal barrier layer for the substrate for operation in a gas turbine engine.

One embodiment is directed to a component of an engine, the component including a substrate and a first layer formed to the substrate, the first layer forming a bond coat for the substrate. The component also includes a second layer formed over the first layer by suspension plasma spraying, wherein the second layer is formed by depositing a material having a thermal conductivity within the range of 4.45 to 30 Kcal / (m h°C) and in the form of a suspension into a plasma jet to melt and propel the material to the first layer.

One embodiment is directed to a method for coating gas turbine engine components; the method includes forming a first layer to a substrate, the first layer forming a bond coat for the substrate. The method also includes forming a second layer over the first layer by electronic beam physical vapor deposition, wherein the second layer is formed with a material having a thermal conductivity within the range of 4.45 to 30 Kcal / (m h°C) and wherein the electronic beam physical vapor deposition coats the first layer with the material.

In one embodiment, the bond coat is formed by a high velocity oxy-fuel (HVOF) source.

In one embodiment, the bond coat is formed by an electric-arc source.

In one embodiment, the bond coat is formed by low pressure plasma spraying.

In one embodiment, the material is at least one of yttria-stabilized zirconia and gadolinium-stabilized zirconia.

In one embodiment, the first layer and second layer are formed in a vacuum to provide a thermal barrier layer for the substrate for operation in a gas turbine engine.

One embodiment is directed to a component of an engine, the component including a substrate and a first layer formed to the substrate, the first layer forming a bond coat for the substrate. The component includes a second layer formed over the first layer by electronic beam physical vapor deposition, wherein the second layer is formed with a material having a thermal conductivity within the range of 4.45 to 30 Kcal / (m h°C) and wherein the electronic beam physical vapor deposition coats the first layer with the material.

In one embodiment, a method for coating gas turbine engine components is provided. The method including the steps of: forming a first layer to a substrate, the first layer forming a bond coat for the substrate; forming a second layer over the first layer by air plasma spraying, wherein the second layer is formed by depositing a powder material having a thermal conductivity within the range of 4.45 to 30 Kcal / (m h°C) into a plasma jet to melt and propel the powder material to the first layer.

In addition to one or more of the features described above, or as an alternative to any of the foregoing embodiments, the bond coat is formed by a high velocity oxy-fuel (HVOF) source.

In addition to one or more of the features described above, or as an alternative to any of the foregoing embodiments, the bond coat is formed by an electric-arc source.

In addition to one or more of the features described above, or as an alternative to any of the foregoing embodiments, the bond coat is formed by low pressure plasma spraying.

In addition to one or more of the features described above, or as an alternative to any of the foregoing embodiments, the powder material is at least one of yttria-stabilized zirconia and gadolinium-stabilized zirconia.

In addition to one or more of the features described above, or as an alternative to any of the foregoing embodiments, the first layer and second layer are formed in ambient air to provide a thermal barrier layer for the substrate for operation in a gas turbine engine.

In yet another embodiment, a component of an engine is provided, the component having: a substrate; a first layer formed to the substrate, the first layer forming a bond coat for the substrate; a second layer formed over the first layer by air plasma spraying, wherein the second layer is formed by depositing a powder material having a thermal conductivity within the range of 4.45 to 30 Kcal / (m h°C) into a plasma jet to melt and propel the powder material to the first layer.

In yet another embodiment, a method for coating gas turbine engine components is provided. The method including the steps of: forming a first layer to a substrate, the first layer forming a bond coat for the substrate; forming a second layer over the first layer by suspension plasma spraying, wherein the second layer is formed by depositing a material having a thermal conductivity within the range of 4.45 to 30 Kcal / (m h°C) and in the form of a suspension into a plasma jet to melt and propel the material to the first layer.

In addition to one or more of the features described above, or as an alternative to any of the foregoing embodiments, the bond coat is formed by a high velocity oxy-fuel (HVOF) source.

In addition to one or more of the features described above, or as an alternative to any of the foregoing embodiments, the bond coat is formed by an electric-arc source.

In addition to one or more of the features described above, or as an alternative to any of the foregoing embodiments, the bond coat is formed by low pressure plasma spraying.

In addition to one or more of the features described above, or as an alternative to any of the foregoing embodiments, the suspension material is at least one of yttria-stabilized zirconia and gadolinium-stabilized zirconia.

In addition to one or more of the features described above, or as an alternative to any of the foregoing embodiments, the first layer and second layer are formed in ambient air to provide a thermal barrier layer for the substrate for operation in a gas turbine engine.

In yet another embodiment, a component of an engine is provided. The component having: a substrate; a first layer formed to the substrate, the first layer forming a bond coat for the substrate; a second layer formed over the first layer by suspension plasma spraying, wherein the second layer is formed by depositing a material having a thermal conductivity within the range of 4.45 to 30 Kcal / (m h°C) and in the form of a suspension into a plasma jet to melt and propel the material to the first layer.

In yet another embodiment, a method for coating gas turbine engine components, the method including the steps of: forming a first layer to a substrate, the first layer forming a bond coat for the substrate; forming a second layer over the first layer by electronic beam physical vapor deposition, wherein the second layer is formed with a material having a thermal conductivity within the range of 4.45 to 30 Kcal / (m h°C) and wherein the electronic beam physical vapor deposition coats the first layer with the material.

In addition to one or more of the features described above, or as an alternative to any of the foregoing embodiments, the bond coat is formed by a high velocity oxy-fuel (HVOF) source.

In addition to one or more of the features described above, or as an alternative to any of the foregoing embodiments, the bond coat is formed by an electric-arc source.

In addition to one or more of the features described above, or as an alternative to any of the foregoing embodiments, the bond coat is formed by low pressure plasma spraying.

In addition to one or more of the features described above, or as an alternative to any of the foregoing embodiments, the material is at least one of yttria-stabilized zirconia and gadolinium-stabilized zirconia.

In addition to one or more of the features described above, or as an alternative to any of the foregoing embodiments, the first layer and second layer are formed in a vacuum to provide a thermal barrier layer for the substrate for operation in a gas turbine engine.

In yet another embodiment, a component of an engine is provided, the component having: a substrate; a first layer formed to the substrate, the first layer forming a bond coat for the substrate; a second layer formed over the first layer by electronic beam physical vapor deposition, wherein the second layer is formed with a material having a thermal conductivity within the range of 4.45 to 30 Kcal / (m h°C) and wherein the electronic beam physical vapor deposition coats the first layer with the material.

Other aspects, features, and techniques will be apparent to one skilled in the relevant art in view of the following detailed description of the embodiments.

### BRIEF DESCRIPTION OF THE DRAWINGS

The features, objects, and advantages of the present disclosure will become more apparent from the detailed description of exemplary embodiments set forth below when taken in conjunction with the drawings in which like reference characters identify correspondingly throughout and wherein:
FIG. 1 depicts a coating process according to one or more embodiments;
FIG. 2 depicts a graphical representation of a coated article according to one or more embodiments;
FIG. 3 depicts a coating process including air plasma spraying according to one or more embodiments;
FIG. 4 depicts a coating process including suspension plasma spraying according to one or more embodiments; and
FIG. 5 depicts a coating process including electronic beam physical vapor deposition according to one or more embodiments.

### DETAILED DESCRIPTION OF THE EXEMPLARY EMBODIMENTS

### Overview and Terminology

One aspect of this disclosure relates to coating processes for components of gas turbine engines. In particular, embodiments are directed to processes to provide a thermal barrier coating (TBC). The processes described herein may allow for increased durability and extended operation life of components, such as components of a gas turbine engine. Certain components of a gas turbine engine operate in thermally severe environments, such as combustor panels. Coupled with a limited cooling flow budget, components, such as combustor panels, frequently display oxidation and thermal-mechanical fatigue (TMF) distress. To enhance component durability, a robust coating can be employed to slow oxidation rate and extend life on wing.

Processes and techniques described herein may be directed to address regions of a combustor (e.g., gas turbine engine combustor, etc.) with potential CMAS (Ca-Mg-Al-Si) concern, as these areas limit part durability. The processes may generate and form TBC coatings that can reduce CMAS spallation life debit. Although the discussion of this application is directed to gas turbine engines and combustor panels, it should be appreciated that the processes and components discussed herein may relate to, or apply to, other components such as non-turbine components.

As used herein, air plasma spray (APS) relates to a plasma spraying process wherein the material to be deposited is in the form of a powder introduced to a plasma jet, such as a plasma jet of a plasma torch. The plasma jet melts the powder and propels the melted powder towards a substrate to allow for molten droplets to flatten, rapidly solidify and form a deposit. APS may be performed in ambient air.

As used herein, suspension plasma spray (SPS) relates to a plasma spraying process wherein the material to be deposited is in the form of a suspension. In SPS the suspension is introduced to a plasma jet, such as a plasma jet of a plasma torch. The plasma jet melts the material in the suspension and propels the melted material towards a substrate to allow for molten droplets to flatten, rapidly solidify and form a deposit. SPS may be performed in ambient air.

As used herein, Electronic Beam Physical Vapor Deposition (EBPVD) related to a form of physical vapor deposition in which a target anode is bombarded with an electron beam given off by a charged filament (e.g., tungsten filament) under high vacuum. The electron beam causes atoms from the target to transform into a gaseous phase. The atoms then condense into solid form, and coat articles in the vacuum (e.g., within a line of sight) with a layer of anode material.

As used herein, low pressure plasma spray (LPPS) relates to a process including depositing material into a plasma jet, such as a plasma jet of a plasma torch. The plasma jet melts the material and propels the melted material towards a substrate to allow for molten droplets to flatten, rapidly solidify and form a deposit. LPPS may be performed in a low pressure atmosphere.

As used herein, cathodic arc (CatArc) relates to physical vapor deposition in which an electric arc is used to vaporize material from a cathode target. The vaporized material then condenses on a substrate forming a film (e.g., thin film). CatArc can be used to deposit metallic, ceramic and composite films. CatArc may be an electric arc type technique for generating a plasma jet in which electric arcs are generated to generate a plasma jet using inert gas, usually argon, which is blown through the arc to excite the gas.

Processes described herein relate to forming layers. A layer may relate to one or more applications of a particular process, such as one or more of APS, SPS, EBPVD, LPPS and/or CatArc. As such, formation of a layer may include formation of one or more layers. Similarly, formation of a layer may relate to a full coating or partial coating of an article in certain embodiments.

As used herein, the terms "a" or "an" shall mean one or more than one. The term "plurality" shall mean two or more than two. The term "another" is defined as a second or more. The terms "including" and/or "having" are open ended (e.g., comprising). The term "or" as used herein is to be interpreted as inclusive or meaning any one or any combination. Therefore, "A, B or C" means "any of the following: A; B; C; A and B; A and C; B and C; A, B and C". An exception to this definition will occur only when a combination of elements, functions, steps or acts are in some way inherently mutually exclusive.

Reference throughout this document to "one embodiment," "certain embodiments," "an embodiment," or similar term means that a particular feature, structure, or characteristic described in connection with the embodiment is included in at least one embodiment. Thus, the appearances of such phrases in various places throughout this specification are not necessarily all referring to the same embodiment. Furthermore, the particular features, structures, or characteristics may be combined in any suitable manner on one or more embodiments without limitation.

### Exemplary Embodiments

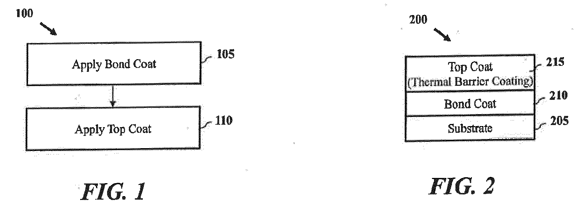

Referring now to the figures, FIG. 1 depicts coating process **100** according to one or more embodiments. Process **100** may be employed to coat components of gas turbine engines, and in particular, to provide a thermal barrier coating (TBC). By way of example, process **100,** and the processes described herein, may provide coating processes for components in a gas turbine engine (e.g., aero propulsion engine) exposed to thermally severe environments, such as a combustor chamber. Process **100** may be performed on a component or substrate, such as a sheet or metal structure.

Process **100** may be initiated at block **105** with applying a bond coat. Coating process **100** also includes applying a top coat at block **110.** In one embodiment, layers formed by process **100** may be ceramic layers. In one embodiment, layers formed by process **100** may be metallic layers. In certain embodiments, process **100** may apply ceramic materials, or materials with a fairly high concentration of ceramic. In other embodiments, process **100** may apply ceramic materials such as Aluminum Oxide (Alumina) or Yttrium Oxide (Yttiria) to a substrate/component. Other coating materials may include Yttria Stabilized Zirconia, Aluminum Oxide (Alumina) or Yttrium Oxide (Yttiria).

FIG. 2 depicts an exemplary representation of a component **200** formed by process **100** and/or processes described herein. Component **200** includes a substrate **205,** bond coat **210** formed on substrate **205** and top coat (e.g., Thermal Barrier Coating) **215** formed on bond coat **210.** Substrate **205** may be a metallic alloy, such as a nickel based alloy. Bond coat **210** may be formed of a ceramic or metallic material. In certain embodiments, bond coat **210** may have a thickness of 0.010-0.08 mm, and top coat **215** has a thickness of 0.02-0.5mm. Component **200** may relate to a gas turbine engine component, including but not limited to hot section components such as combustor panels, turbine blades, turbine vanes, and air seals.

As will be described in more detail below and according to one or more embodiments, application of a bond coat (e.g., bond coat **210,** a first layer) at block **105** may be performed by one or more coating processes. Table 1 lists one or more bond coat processes that may be employed at block **105** to form bond coat **210.**

**TABLE 1**

| Bond Coat Process | APS | LPPS | CatArc |
|---|---|---|---|
| Microstructure | Porous/Splat | Dense | Dense |
| Oxidation life | Poor | Excellent | Excellent |
| Pre-Oxidation | Yes | No | No |

APS can provide a porous/splat microstructure for bond coat **210.** However, the oxidation life of APS may be poor for components. APS can result in pre-oxidation which may result in a lower thermal shock resistance. LPPS and CatArc techniques provide a dense microstructure and excellent oxidation life for components and bond coat **210.** LPPS and CatArc do not include pre-oxidation treatment.

As will be described in more detail below and according to one or more embodiments, application of a top coat **215** or thermal barrier coating at block **110** may be performed by one or more coating processes. Table 2 lists one or more top coat processes that may be employed at block **110** to form top coat **215.**

**TABLE 2**

| TBC Process | APS | SPS | EBPVD |
|---|---|---|---|
| Microstructure | Porous/Splat | Porous/Columnar | Columnar |
| Spall Life | Poor | Excellent | Excellent |
| Cost life | Low | Medium | Very High |
| Application Temp. | Medium | Medium | High |

APS can provide a porous/splat microstructure for top coat **215.** However, the spallation ("spall") life of APS may be poor for components. APS may be characterized as low cost technique and may be characterized as having a medium rating with respect to exposure to high temperature gas turbine operations. SPS can provide a porous/columnar microstructure for top coat **215.** The spallation life of SPS may be characterized as excellent. SPS may be characterized as a medium cost technique and may be characterized as having a medium rating with respect to exposure to high temperature gas turbine operations. EBPVD can provide a columnar microstructure for top coat **215.** The spallation life of EBPVD may be characterized as excellent. EBPVD may be characterized as a very high cost technique and may be characterized as having a high rating with respect to exposure to high temperature gas turbine operations.

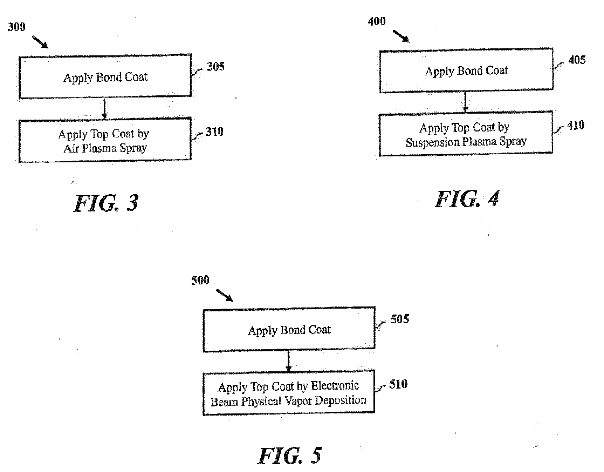

FIGs. 3-5 depict coating processes for a providing a TBC according to one or more embodiments. The processes of FIGs. 3-5 incorporate the discussion above with respect to process **100** and component **200** and may be applied similarly.

Referring now to FIG. 3, coating process **300** is depicted for providing a coating by air plasma spraying according to one or more embodiments. Process **300** may be provided to coat gas turbine engine components. Process **300** may be initiated at block **305** by forming a first layer to a substrate. The first layer may form a bond coat (e.g., bond coat **210**) for a substrate (e.g., substrate **205**). The bond coat may be formed at block **305** by one or more of a high velocity oxy-fuel (HVOF) source, an electric-arc source (e.g., CatArc), and low pressure plasma spraying (LPPS).

Process **300** includes forming a second layer (e.g., top coat **215**) over the first layer by air plasma spraying at block **310.** The second layer is formed at block **310** by depositing a powder material having a thermal conductivity within the range of 4.45 to 30 Kcal / (m h°C) into a plasma jet to melt and propel the powder material to the first layer.

In one embodiment, the powder material of process **300** is at least one of yttria-stabilized zirconia and gadolinium-stabilized zirconia. In one embodiment, the first layer and second layer of process **300** are formed in ambient air to provide a thermal barrier layer for the substrate for operation in a gas turbine engine.

Process **300** may be performed to form a component of a gas turbine engine including a substrate, and a first layer formed to the substrate, the first layer forming a bond coat for the substrate. The component formed by process **300** also includes a second layer formed over the first layer by air plasma spraying, wherein the second layer is formed by depositing a powder material having a thermal conductivity within the range of 4.45 to 30 Kcal / (m h°C) into a plasma jet to melt and propel the powder material to the first layer.

Referring now to FIG. 4, coating process **400** is depicted for a coating process including suspension plasma spraying according to one or more embodiments. Process **400** may be provided to coat gas turbine engine components. Process **400** may be initiated at block **405** by forming a first layer to a substrate. The first layer may form a bond coat (e.g., bond coat **210**) for a substrate (e.g., substrate **205**). The bond coat may be formed at block **405** by one or more of a high velocity oxy-fuel (HVOF) source, an electric-arc source (e.g., CatArc), and low pressure plasma spraying (LPPS).

Process **400** includes forming a second layer (e.g., top coat **215**) over the first layer by suspension plasma spraying at block **410.** The second layer is formed at block **410** by depositing a material having a thermal conductivity within the range of 4.45 to 30 Kcal / (m h°C) and in the form of a suspension into a plasma jet to melt and propel the material to the first layer.

In one embodiment, the powder material of process **400** is at least one of yttria-stabilized zirconia and gadolinium-stabilized zirconia. In one embodiment, the first layer and second layer of process **400** are formed in ambient air to provide a thermal barrier layer for the substrate for operation in a gas turbine engine.

Process **400** may be performed to form a component of a gas turbine engine including a substrate, and a first layer formed to the substrate, the first layer forming a bond coat for the substrate. The component formed by process **400** also includes a second layer formed by depositing a material having a thermal conductivity within the range of 4.45 to 30 Kcal / (m h°C) and in the form of a suspension into a plasma jet to melt and propel the material to the first layer.

Referring now to FIG. 5, coating process **500** is depicted for providing a coating by electronic beam physical vapor deposition (EBPVD) according to one or more embodiments. Process **500** may be provided to coat gas turbine engine components. Process **500** may be initiated at block **505** by forming a first layer to a substrate. The first layer may form a bond coat (e.g., bond coat **210**) for a substrate (e.g., substrate **205**). The bond coat may be formed at block **505** by one or more of a high velocity oxy-fuel (HVOF) source, an electric-arc source (e.g., CatArc), and low pressure plasma spraying (LPPS).

Process **500** includes forming a second layer (e.g., top coat **215**) over the first layer by electronic beam physical vapor deposition at block **510.** The second layer is formed at block **510** by a material having a thermal conductivity within the range of 4.45 to 30 Kcal / (m h°C) and wherein the electronic beam physical vapor deposition coats the first layer with the material.

In one embodiment, the powder material of process **500** is at least one of yttria-stabilized zirconia and gadolinium-stabilized zirconia. In one embodiment, the first layer and second layer of process **500** are formed in a vacuum to provide a thermal barrier layer for the substrate for operation in a gas turbine engine.

Process **500** may be performed to form a component of a gas turbine engine including a substrate, and a first layer formed to the substrate, the first layer forming a bond coat for the substrate. The component formed by process **500** also includes a second layer formed over the first layer by electronic beam physical vapor deposition, wherein the second layer is formed with a material having a thermal conductivity within the range of 4.45 to 30 Kcal / (m h°C) and wherein the second layer is formed by electronic beam physical vapor deposition to coat the first layer with the material.

While this disclosure has been particularly shown and described with references to exemplary embodiments thereof, it will be understood by those skilled in the art that various changes in form and details may be made therein without departing from the scope of the claimed embodiments.

The following clauses set out features of the present disclosure which may or may not presently be claimed but which may form basis for future amendments and/or a divisional application.
1. A method for coating gas turbine engine components, the method comprising:
   forming a first layer to a substrate, the first layer forming a bond coat for the substrate;
   forming a second layer over the first layer by air plasma spraying, wherein the second layer is formed by depositing a powder material having a thermal conductivity within the range of 4.45 to 30 Kcal / (m h°C) into a plasma jet to melt and propel the powder material to the first layer.
2. The method of clause 1, wherein the bond coat is formed by a high velocity oxy-fuel (HVOF) source.
3. The method of clause 1, wherein the bond coat is formed by an electric-arc source.
4. The method of clause 1, wherein the bond coat is formed by low pressure plasma spraying.
5. The method of clause 1, wherein the powder material is at least one of yttria-stabilized zirconia and gadolinium-stabilized zirconia.
6. The method of clause 1, wherein the first layer and second layer are formed in ambient air to provide a thermal barrier layer for the substrate for operation in a gas turbine engine.
7. A component of an engine, the component comprising:
   a substrate;
   a first layer formed to the substrate, the first layer forming a bond coat for the substrate;
   a second layer formed over the first layer by air plasma spraying, wherein the second layer is formed by depositing a powder material having a thermal conductivity within the range of 4.45 to 30 Kcal / (m h°C) into a plasma jet to melt and propel the powder material to the first layer.
8. A method for coating gas turbine engine components, the method comprising:
   forming a first layer to a substrate, the first layer forming a bond coat for the substrate;
   forming a second layer over the first layer by suspension plasma spraying, wherein the second layer is formed by depositing a material having a thermal conductivity within the range of 4.45 to 30 Kcal / (m h°C) and in the form of a suspension into a plasma jet to melt and propel the material to the first layer.
9. The method of clause 8, wherein the bond coat is formed by a high velocity oxy-fuel (HVOF) source.
10. The method of clause 8, wherein the bond coat is formed by an electric-arc source.
11. The method of clause 8, wherein the bond coat is formed by low pressure plasma spraying.
12. The method of clause 8, wherein the suspension material is at least one of yttria-stabilized zirconia and gadolinium-stabilized zirconia.
13. The method of clause 8, wherein the first layer and second layer are formed in ambient air to provide a thermal barrier layer for the substrate for operation in a gas turbine engine.
14. A component of an engine, the component comprising:
   a substrate;
   a first layer formed to the substrate, the first layer forming a bond coat for the substrate;
   a second layer formed over the first layer by suspension plasma spraying, wherein the second layer is formed by depositing a material having a thermal conductivity within the range of 4.45 to 30 Kcal / (m h°C) and in the form of a suspension into a plasma jet to melt and propel the material to the first layer.
15. A method for coating gas turbine engine components, the method comprising:
   forming a first layer to a substrate, the first layer forming a bond coat for the substrate;
   forming a second layer over the first layer by electronic beam physical vapor deposition, wherein the second layer is formed with a material having a thermal conductivity within the range of 4.45 to 30 Kcal / (m h°C) and wherein the electronic beam physical vapor deposition coats the first layer with the material.
16. The method of clause 15, wherein the bond coat is formed by a high velocity oxy-fuel (HVOF) source.
17. The method of clause 15, wherein the bond coat is formed by an electric-arc source.
18. The method of clause 15, wherein the bond coat is formed by low pressure plasma spraying.
19. The method of clause 15, wherein the material is at least one of yttria-stabilized zirconia and gadolinium-stabilized zirconia.
20. The method of clause 15, wherein the first layer and second layer are formed in a vacuum to provide a thermal barrier layer for the substrate for operation in a gas turbine engine.
21. A component of an engine, the component comprising:
   a substrate;
   a first layer formed to the substrate, the first layer forming a bond coat for the substrate;
   a second layer formed over the first layer by electronic beam physical vapor deposition, wherein the second layer is formed with a material having a thermal conductivity within the range of 4.45 to 30 Kcal / (m h°C) and wherein the electronic beam physical vapor deposition coats the first layer with the material.

## Claims

1. A method (100; 300) for coating gas turbine engine components (200), the method comprising:
forming a first layer to a substrate (205), the first layer forming a bond coat (210) for the substrate;
forming a second layer (215) over the first layer by air plasma spraying, wherein the second layer is formed by depositing a powder material having a thermal conductivity within the range of 4.45 to 30 Kcal / (m h°C) into a plasma jet to melt and propel the powder material to the first layer.

2. The method (100; 300) of claim 1, wherein the powder material is at least one of yttria-stabilized zirconia and gadolinium-stabilized zirconia.

3. A component (200) of an engine, the component comprising:
a substrate (205);
a first layer formed to the substrate, the first layer forming a bond coat (210) for the substrate;
a second layer (215) formed over the first layer by air plasma spraying, wherein the second layer is formed by depositing a powder material having a thermal conductivity within the range of 4.45 to 30 Kcal / (m h°C) into a plasma jet to melt and propel the powder material to the first layer.

4. A method (100; 400) for coating gas turbine engine components (200), the method comprising:
forming a first layer to a substrate (205), the first layer forming a bond coat (210) for the substrate;
forming a second layer (215) over the first layer by suspension plasma spraying,
wherein the second layer is formed by depositing a material having a thermal conductivity within the range of 4.45 to 30 Kcal / (m h°C) and in the form of a suspension into a plasma jet to melt and propel the material to the first layer.

5. The method (100; 400) of claim 4, wherein the suspension material is at least one of yttria-stabilized zirconia and gadolinium-stabilized zirconia.

6. The method (100; 300; 400) of claim 1, 2, 4 or 5, wherein the first layer and second layer (215) are formed in ambient air to provide a thermal barrier layer for the substrate for operation in a gas turbine engine.

7. A component (200) of an engine, the component comprising:
a substrate (205);
a first layer formed to the substrate, the first layer forming a bond coat (210) for the substrate;
a second layer (215) formed over the first layer by suspension plasma spraying,
wherein the second layer is formed by depositing a material having a thermal conductivity within the range of 4.45 to 30 Kcal / (m h°C) and in the form of a suspension into a plasma jet to melt and propel the material to the first layer.

8. A method (100; 500) for coating gas turbine engine components (200), the method comprising:
forming a first layer to a substrate (205), the first layer forming a bond coat (210) for the substrate;
forming a second layer (215) over the first layer by electronic beam physical vapor deposition, wherein the second layer is formed with a material having a thermal conductivity within the range of 4.45 to 30 Kcal / (m h°C) and wherein the electronic beam physical vapor deposition coats the first layer with the material.

9. The method (100; 300; 400; 500) of claim 1, 2, 4, 5, 6 or 8, wherein the bond coat (210) is formed by a high velocity oxy-fuel (HVOF) source.

10. The method (100; 300; 400; 500) of claim 1, 2, 4, 5 or 8, wherein the bond coat (210) is formed by an electric-arc source.

11. The method (100; 300; 400; 500) of claim 1, 2, 4, 5, or 8, wherein the bond coat (210) is formed by low pressure plasma spraying.

12. The method (100; 500) of claim 8, 9, 10 or 11, wherein the material is at least one of yttria-stabilized zirconia and gadolinium-stabilized zirconia.

13. The method (100; 500) of claim 8 or 10, wherein the first layer and second layer are formed in a vacuum to provide a thermal barrier layer for the substrate for operation in a gas turbine engine.

14. A component (200) of an engine, the component comprising:
a substrate (205);
a first layer formed to the substrate, the first layer forming a bond coat (210) for the substrate;
a second layer (215) formed over the first layer by electronic beam physical vapor deposition, wherein the second layer has been formed with a material having a thermal conductivity within the range of 4.45 to 30 Kcal / (m h°C) and wherein the electronic beam physical vapor deposition coats the first layer with the material.

15. A component as claimed in claim 3, 7 or 14, wherein the second layer has been formed with at least one of yttria-stabilized zirconia and gadolinium-stabilized zirconia, and preferably wherein the bond coat has been formed by one of a high velocity oxy fuel (HVOF) source, an electric arc source or a lower pressure plasma spraying.
